# EUROPÄISCHE PATENTSCHRIFT

(11) **EP 1 530 616 B1**
(45) Veröffentlichungstag und Bekanntmachung des Hinweises auf die Patenterteilung: **03.05.2006**
(21) Anmeldenummer: 03792201.0
(22) Anmeldetag: 16.07.2003
(51) Int. Cl.: C09J 4/00, C08F 220/18, C08F 2/38, C08F 293/00

(54) **VERFAHREN ZUR HERSTELLUNG VON ACRYLATHAFTKLEBEMASSEN UNTER NUTZUNG VON METALL-SCHWEFEL-VERBINDUNGEN**
METHOD FOR THE PRODUCTION OF ACRYLATE ADHESIVE MATERIALS USING METAL-SULPHUR COMPOUNDS
PROCEDE DE PREPARATION DE MASSES DE MATIERE AUTO-ADHESIVE D'ACRYLATE PAR UTILISATION DE COMPOSES METAL-SOUFRE

(30) Priorität: 13.08.2002 DE 10237000
(43) Veröffentlichungstag der Anmeldung: 18.05.2005
(73) Patentinhaber: tesa AG, 20253 Hamburg (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2003/007679
(87) Internationale Veröffentlichungsnummer: WO 2004/018582

(56) Entgegenhaltungen:
- EP-A- 0 036 456
- DE-A- 10 030 217

## Beschreibung

Die Erfindung betrifft ein Verfahren zur Herstellung von Acrylathaftklebemassen, derart erhältliche Haftklebemassen und deren Verwendung.

Für industrielle Haftklebeband-Anwendungen werden sehr häufig Polyacrylathaft-klebemassen eingesetzt. Polyacrylate besitzen diverse Vorteile gegenüber anderen Elastomeren. Sie sind sehr stabil gegenüber UV-Licht, Sauerstoff und Ozon. Hingegen enthalten synthetische und Naturkautschukklebemassen zumeist Doppelbindungen, die diese Klebemassen gegen die vorher genannten Umwelteinflüsse labil machen.
Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer vernetzt. Die Härtung verläuft thermisch oder durch UV-Vemetzung oder durch ES-Härtung (ES: Elektronenstrahlung). Der beschriebene Prozess ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Weiterhin ist es sehr schwierig, Haftklebebänder mit hohem Masseauftrag blasenfrei herzustellen.

Eine Verbesserung dieser Nachteile bedeutet der Heißschmelz-Prozess (Hotmelt-Prozess). Hier wird der Haftkleber in der Schmelze auf das Trägermaterial aufgetragen.

Mit dieser Technik sind aber auch Einschränkungen verbunden. Vor der Beschichtung wird der Haftklebemasse das Lösemittel in einem Trocknungsextruder entzogen. Der Trocknungsprozess ist mit einer relativ hohen Temperatur und Schereinwirkung verbunden, so dass besonders hochmolekulare Polyacrylathaftklebemassen stark geschädigt werden. Die Acrylathaftklebemasse vergelt oder der niedermolekulare Anteil wird durch Molekulargewichtsabbau stark angereichert wird. Beide Effekte sind unerwünscht, da sie für die Anwendung nachteilig sind. Die Klebemasse lässt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozess stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen (Makromoleküle, Hans-Georg Elias, 5. Auflage, 1990, Hüthig & Wepf Verlag Basel). Diese Regler reduzieren das Molekulargewicht, aber verbreitern die Molekulargewichtsverteilung.
Bei langer thermischer Belastung, wie es typisch für einen Haftschmelzprozess ist, werden aber durch thermischen Abbau oder durch Scherung leichtflüchtige Thiole freigesetzt, die einen unangenehmen Geruch aufweisen.

In den vorstehend erwähnten Schriften wurde versucht, die Steuerung von radikalischen Polymerisationsreaktionen zu verbessern. Dennoch besteht der Bedarf für ein Polymerisationsverfahren, welches hoch reaktiv ist und mit dem sich hohe Umsätze bei gleichzeitig hohem Molekulargewicht und niedriger Polydispersität realisieren lassen. Der Erfüllung dieser Anforderungen wurde sich in der DE 100 36 801 angenommen.
Eine weitere Variante zur Herstellung der Polyacrylaten ist der RAFT-Prozeß (Reversible Addition-Fragmentation Chain Transfer). Der Prozess ist in den WO 9801478 und WO 9931144 ausführlich beschrieben, eignet sich jedoch in der dort dargestellten Art und Weise nicht zur Herstellung von Haftklebemassen, da die erzielten Umsätze sehr gering sind und das mittlere Molekulargewicht der hergestellten Polymere zu niedrig für Acrylathaftklebemassen ist. Die beschriebenen Polymere lassen sich somit nicht als Acrylathaftklebemassen einsetzen. Ein Verbesserung wurde mit dem in der DE 100 30 217.3 beschriebenen Prozess erreicht.
Für diese Prozesse bleibt aber weiterhin das Problem der Geruchsbelästigung durch leicht flüchtige Thiolverbindungen bestehen, die nach wie vor über thermische Zersetzung oder Schereinfluss gebildet werden.

Weiterhin ist es zur Herstellung von Acrylathaftklebebändern in der Regel erforderlich, solche nach den oben beschriebenen Verfahren hergestellten Polyacrylate mit energiereicher (aktinischer) Strahlung zu vernetzen. Auch durch diesen Prozess (insbesondere durch Bestrahlung mit Elektronenstrahlen) werden Fragmente gebildet, die aus Thiolen bestehen und einen unangenehmen Geruch verursachen.

Es verbleibt demnach das Problem der Geruchsbelästigung nach thermischer Lagerung, unter Scherung und unter aktinischer Bestrahlung von Acrylatschmelzhaftklebern, die die wie oben beschreieben hergestellten Haftklebemassen somit für einen breiten Anwendungsbereich verschließen.

Aufgabe der Erfindung ist es daher, ein Verfahren zur Herstellung zur Verfügung zu stellen, das Haftklebemassen zur Verfügung stellt, welche im Hotmeltverfahren unter thermischer Lagerung, unter Scherung und unter aktinischer Strahlung ein vermindertes oder gar kein Geruchverhalten aufweisen.

Überraschenderweise wurde gefunden, dass ein Verfahren unter Verwendung von Metall-Schwefel-Verbindungen zu Acrylatschmelzhaftklebern führt, die die gewünschten Eigenschaften aufzeigen, und dass Polyacrylathaftklebebänder hergestellt aus Acrylatschmelzhaftklebern mit Metall-Schwefel-Verbindungen kein Geruchsverhalten nach der Hotmelt-Beschichtung und nach der Vernetzung mit aktinischer Bestrahlung aufweisen.

Die Erfindung betrifft entsprechend ein Verfahren zur Herstellung von Polyacrylathaftklebemassen, wobei von einer die Atomabfolge C - S - C enthaltenden Polyacrylatmasse ausgegangen wird und dieser zumindest eine Metallverbindung des Typs (L)_{y}M zugesetzt wird, wobei M ein Metallatom oder Metallion darstellt, L Gegenionen oder Liganden bezeichnet und y zu 0 bis 6 gewählt wird.

Eine besonders geeignete Variante des erfindungsgemäßen Verfahrens enthält zumindest die folgenden Verfahrensschritte:
- Polymerisation einer Monomermischung unter Verwendung zumindest einer Verbindung enthaltend die Atomabfolge C - S - C als Regler,
- Additivierung mit Metallverbindungen des Typs (L)_{y}M,
- Aufkonzentartion des Polymerisates zu einer Heißschmelzmasse,
- Vernetzung des Polymers durch actinische Strahlung.

Das erfindungsgemäße Verfahren verläuft sehr vorteilhaft, wenn pro Polymerkette des entstehenden Polymers zumindest eine Atomabfolge C - S - C eingebaut ist.

Zur Herstellung von Acrylathaftklebemassen werden in einer bevorzugten Vorgehensweise des erfindungsgemäßen Verfahrens Polymere aus Acrylsäureestem und/oder Methacrylsäureester bzw. deren freien Säuren mit der folgenden Formel

CH₂ = CH(R₁)(COOR₂),

hergestellt, wobei R₁ = H oder CH₃ und R₂ eine Alkylkette mit 1-30 C-Atomen oder H ist [Monomere a)]. Der Anteil der Monomere a) an der zu polymerisierenden Monomermischung beträgt vorteilhaft 70 - 99.9 Gew.-%, insbesondere 75-100 Gew.-%.
Weiterhin können als Comonomere [Monomere b)] in bevorzugter Vorgehensweise olefinisch ungesättigte Monomere mit funktionellen Gruppen zu der zu polymerisierenden Monomermischung zugegeben sein. Deren Anteil beträgt vorteilhaft 0-30 Gew.-%.
Die Anteile der Monomere a) und der Monomere b) können sich dabei vorteilhaft zu 100 % addieren, die Summe kann aber auch geringer sein, indem weitere Comonomere zu der Monomermischung zugesetzt werden.

In einer vorteilhaften Vorgehensweise werden als Monomere a) Acrylmomonere eingesetzt, die Acryl- und/oder Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung unnötig einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. 2-Ethylhexylacrylat. Weitere Verbindungsklassen, die ebenfalls (bevorzugt aber in geringen Mengen) als Monomere a) hinzugesetzt werden können, sind Methylmethacrylate, Cyclohexylmethacrylate und Isobornylmethacrylate.

In einer sehr bevorzugten Variante des erfindungsgemäßen Verfahrens werden im Sinne der Monomere b) Photoinitiatoren mit zumindest einer Vinylverbindung eingesetzt. Die Photoinitiatoren können vorteilhaft vom Typ Norrish I oder Norrish II sein. Die Photoinitiatoren beinhalten dabei als Baustein bevorzugt einen oder mehrere der folgenden Reste: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketone-, Azobenzoine, Thioxanthon-, Hexarylbisimidazol-, Triazin-, oder Fluorenon, wobei jeder dieser Reste zusätzlich mit einem oder mehreren Halogenatomen und/oder einer oder mehreren Alkoxygruppen und/oder einer oder mehreren Aminogruppen und/oder einer oder mehreren Hydroxygruppen substituiert sein kann. Ein repräsentativer Überblick wird in "Photoinitiation Photopolymerization and Photocuring, Fundamentals and Applications, von J.-P. Fouassier, Hanser Publishers, München, Wien , New York 1995" gegeben. Ergänzend kann betrachtet werden: "Chemistry & Technology of UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994".
Beispiele sind acryliertes Benzophenon, wie z.B. Ebecryl P 36™ der Fa. UCB, oder Benzoinacrylat.

Ebenfalls vorteilhaft können als Monomere b) Vinylester, Vnylether, Vinylhalogenide, Vinylidenhalogenide, Vinylverbindungen mit aromatischen Cyclen und Heterocyclen in α-Stellung eingesetzt werden. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere b) werden Monomere mit folgenden funktionellen Gruppen eingesetzt: Hydroxy-, Carboxy-, Epoxy-, Säureamid-, Isocyanato- oder Aminogruppen.

In einer vorteilhaften Variante werden im Sinne der Monomere b) Acrylmonomere entsprechend der folgenden allgemeinen Formel eingesetzt, 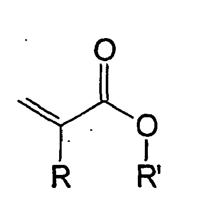 wobei R = H oder CH₃ ist und der Rest -OR' die funktionelle Gruppe darstellt oder beinhaltet und z.B. in einer besonders bevorzugten Auslegung eine H-Donor-Wirkung besitzt, die die UV-Vemetzung erleichtert.

Besonders bevorzugte Beispiele für die Komponente b) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Vorgehensweise werden für die Komponente b) aromatische Vinylverbindungen eingesetzt, wobei die aromatischen Kerne bevorzugt aus C₄ bis C₁₈ -Kohlenwasserstoffresten bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbeniöesäure, wobei diese Aufzählung nicht abschließend ist.

In einer weiteren erfinderischen Vorgehensweise können auch Monomere eingesetzt werden, die zumindest eine Thioether-, Thioester- oder Thiocarbonat-Funktion enthalten.

Zur Polymerisation werden die Monomere dermaßen gewählt, dass die resultierenden Polymere als industriell verwendbare Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die statische Glasübergangstemperatur des resultierenden Polymers vorteilhaft unterhalb von 25 °C.

Für die Herstellung der Polymere werden vorteilhaft radikalische Polymerisationsverfahren gewählt, wobei erfindungsgemäß andere Polymerisationsverfahren aber nicht ausgeschlossen werden sollen, insbesondere anionische Verfahren.

Zur radikalischen Polymerisation werden in bevorzugter Weise radikalische Initiatorsysteme, insbesondere thermisch zerfallende radikalbildende Azo- oder Peroxo-Initiatoren, oder Redoxsysteme eingesetzt. Prinzipiell eignen sich hierfür jedoch alle für Acrylate bekannten üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-per-carbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) verwendet.

Die Polymerisation kann in Substanz, in Gegenwart eines organischen Lösüngsmittels oder Gemischen aus organischen Lösungsmitteln, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel oder Gemische von Lösungsmitteln sind reine Alkane (Hexan, Heptan, Octan, Isooctan), aromatische Kohlenwasserstoffe (Benzol, Toluol, Xylol), Ester (Essigsäureethylester, Essigsäurepropyl-, -butyl-, oder -hexylester), halogenierte Kohlenwasserstoffe (Chlorbenzol), Alkanole (Methanol, Ethanol, Ethylenglycol, Ethylenglycolmonomethylether), Ether (Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Sulfoxiden, Sulfonen, Alkoholderivaten, Hydroxyetherderivaten, Aminoalkoholen, Ketonen und dergleichen, sowie Derivaten und Gemischen davon.

Zur Herstellung von Polyacrylaten mit zumindestens einer Thioetherfunktion eignen sich in besonders bevorzugter Weise Zusätze von Thiolen und/oder Dithioethern. Diese Verbindungen wirken als Polymerisationsregler. Zwei Beispiele, ohne Anspruch auf Vollständigkeit , sind z.B. Dodecanthiol und Hexadecanthiol.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160°C, je nach Initiatortyp, initiiert werden. Die Polymerisation kann aber auch mit UV-Licht und einem UV-Photoinitiator gestartet werden, wobei in diesem Fall durch den UV-Fotoinitiator Radikale gebildet werden, die die Polymerisation initiieren. Durch die UV-Dosis kann die Anzahl der freien Radikale gesteuert werden.

Zur Herstellung von Polyacrylaten mit einer Polydispersität von kleiner 3,0 werden bevorzugt kontrollierte radikalische Polymerisationen eingesetzt.

Als Regler werden Verbindungen eingesetzt, welche die Atomabfolge C - S - C aufweisen. Hierfür eignen sich insbesondere organische Ether, Ester und Carbonate, bei welchen zumindest eines der Sauerstoffatome, bevorzugt mehrere, besonders bevorzugt alle Sauerstoffatome durch Schwefelatome substituiert sind. Gegebenfalls können eines oder einige der Sauerstoffatome auch durch andere Heteroatome substituiert sein, so z.B. durch Stickstoff.

Besonders vorteilhaft als Regler werden Verbindungen eingesetzt, die sich durch eine der folgenden Strukturen darstellen lassen:

R* - S - R** (Thioether)

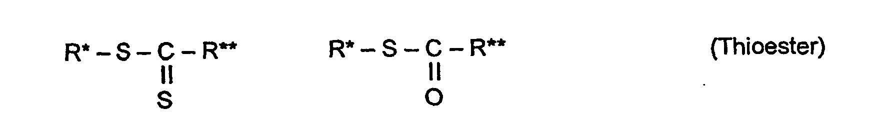

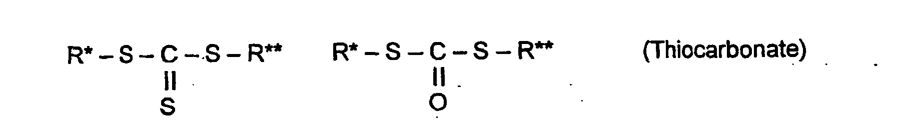

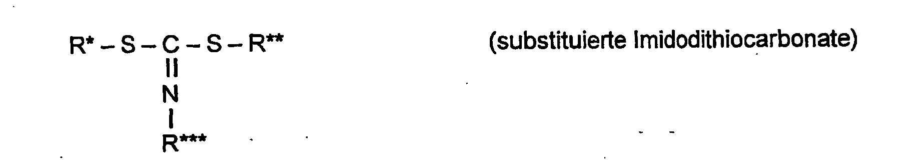

wobei R*, R**, R*** unabhängig voneinander aromatische oder aliphatische gesättigte oder ungesättigte Kohlenwasserstoffreste darstellen, die monomer, oligomer oder polymer vorliegen können.

Zur Herstellung von zumindest Dithioester-haltigen Polyacrylaten werden zur Polymerisation bevorzugt Kontrollreagenzien der allgemeinen Formel eingesetzt: 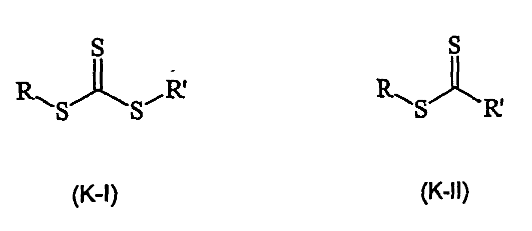 worin
- R und R' unabhängig voneinander gewählt oder gleich sind
   - verzweigte und unverzweigte C₁- bis C₁₈-Alkylreste; C₃- bis C₁₈-Alkenylreste; C₃₋bis C₁₈-Alkinylreste;
   - H oder C₁- bis C₁₈ Alkxoy
   - durch zumindest eine OH-Gruppe oder ein Halogenatom oder einen Silylether substituierte C₁- bis C₁₈-Alkylreste; C₃- bis C₁₈-Alkenylreste; C₃- bis C₁₈-Alkinylreste;
   - C₂-C₁₈ₑ-Hetero-Alkylreste mit mindestens einem 0-Atom und/oder einer NR'-Gruppe in der Kohlenstoffkette
   - mit zumindest einer Estergruppe, Amingruppe, Carbonatgruppe, Cyano-, Isocyano- und/oder Epoxidgruppe und/oder mit Schwefel substituierte C₁-C₁₈-Alkylreste, C₃-C₁₈-Alkenylreste, C₃-C₁₈-Alkinylreste;
   - C₃-C₁₂-Cycloalkylreste
   - C₆-C₁₈- Aryl- oder Benzylreste
   - Wasserstoff
darstellen.

Kontrollreagenzien des Typs (K-I) bestehen in einer vorteilhaften Vorgehensweise aus Verbindungen mit den folgenden Eigenschaften:
- Halogene sind bevorzugt F, Cl, Br oder I, mehr bevorzugt Cl und Br.
- als Alkyl-, Alkenyl- und Alkinylreste in den verschiedenen Substituenten werden vorteilhaft lineare als auch verzweigte Ketten eingesetzt.
- als Beispiele für Alkylreste, welche 1 bis 18 Kohlenstoffatome enthalten, seien Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl genannt.
- Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
- Beispiele für Alkinyl mit 3 bis 18 Kohlenstoffatomen sind Propinyl, 2-Butinyl, 3-Butinyl, n-2-Octinyl und n-2-Octadecinyl.
- Beispiele für Hydroxy-substituierte Alkylreste sind Hydroxypropyl, Hydroxybutyl oder Hydroxyhexyl.
- Beispiele für Halogen-substituierte Alkylreste sind Dichlorobutyl, Monobromobutyl oder Trichlorohexyl.
- Ein geeigneter C₂-C₁₈-Hetero-Alkylrest mit mindestens einem O-Atom in der Kohlenstoffkette ist beispielsweise -CH₂CH₂O-CH₂CH₃.
- Als C₃-C₁₂-Cycloalkylreste dienen beispielsweise Cyclopropyl, Cyclopentyl, Cyclohexyl oder Trimethylcyclohexyl.
- Als C₆-C₁₈-Arylreste dienen beispielsweise Phenyl, Naphthyl, Benzyl, 4-tert.-Butylbenzyl- oder weitere substituierte Phenyl, wie, z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien geeignet 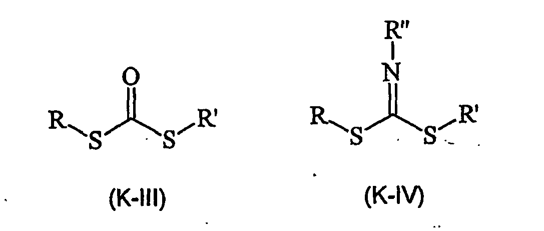 wobei R und R' wie obenstehend definiert sind und R" ebenfalls die vorstehend genannten Reste R oder R', unabhängig von deren Wahl, umfassen kann.

In einer besonders bevorzugten Ausführungsform der Erfindung werden Verbindungen (K-Ia) und (K-IIa) als Kontrollreagenzien eingesetzt.

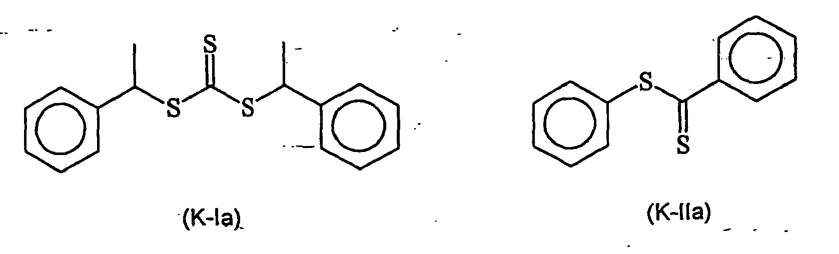

Der Polyacrylatmasse wird zumindest eine Metallverbindung des Typ (L)_{y}M zugesetzt, wobei M ein Metallatom oder ein Metallion repräsentiert, L Gegenionen oder Liganden darstellt und y von 0 bis 6 gewählt wird. Als Metallverbindung wird in bevorzugter Weise ein Metallsalz, ein Metallhydroxid oder eine Metallkomplexverbindung eingesetzt.

Sehr geeignete Metalle M sind solche, die sich gut als Zentralatome oder Zentralionen in Metallkomplexen eignen. Sehr vorteilhaft wird das Metall M dabei aus der folgenden Gruppe ausgewählt:
Kupfer, Nickel, Eisen, Zink, Zinn, Cadmium, Aluminium, Kobalt, Silber, Gold, Palladium, Platin, Rutenium, Rhodium, Osmium, lridium, Mangan, Rhenium.

Weiterhin lassen sich als Metalle Seltenerdmetalle einsetzen.

Die Gegenionen beziehungsweise Liganden L lassen sich vorteilhaft unabhängig voneinander aus der folgenden Gruppe wählen:
Halogenide, Alkoxide, Boride, Hydroxide, Nitrate, Phophate, Perchlorate, Phtalocyanine, Oxinate, Acetate, Acetylacetonate, Corbonate, Formiate, Cyanide, Naphthalocyanine, Rhodanide, Carboxylate, Chelate, Resinate, Carbide, Phorphine, Alkyle, Alkenyle, Alkinyle, Dione, Aryle, substituierte Aryle, Citrate, Heterocyclen, Pentadienyl, Amine, multifunktionelle Amine, Ether, Kronenether.
Es können im Sinne von L aber auch andere Gegenionen und/oder Liganden eingesetzt werden. Insbesondere ist es günstig, wenn (beispielsweise durch die Bindungsenergie M-L) ein Addition von schwefelhaltigen Liganden und/oder eine Substitution durch schwefelhaltigen Liganden unterstützt wird.

Prinzipiell kann die Metallverbindung des Typs (L)_{y}-M zu einem frei wählbaren Zeitpunkt im Verfahrensablauf zugegeben werden, bevorzugt aber nach der Polymerisierung und vor einer nachfolgenden Vernetzung. Für das erfinderische Verfahren ist es besonders vorteilhaft, wenn die Metallverbindungen vor dem Hotmelt-Prozess oder während des Hotmelt-Prozesses zu dem den Regler enthaltenden Polyacrylat hinzugegeben wird.
Die Zugabe kann in Lösung oder in der Schmelze erfolgen. Thioverbindungen, die durch Scherung oder durch thermische Belastungen entstehen, können auf diesem Weg mit den Metallverbindungen des Typs (L)_{y}-M reagieren und somit die erfinderischen Polyacrylathaftklebemassen mit Verbindungen des Typs (L)_{z}-M-(SR)ₓ bilden. Die Reaktion kann dabei derart aussehen, dass das Metall zusätzliche Koordinationsstellen besetzt oder dass ein Teil oder alle der y Liganden oder Gegenionen L ausgetauscht werden. Dabei kann sich die Zahl der pro L beanspruchten Koordinationsstellen ändern.

Der Monomermischung beziehungsweise dem Polymerisat können vor, während oder nach der Polymerisation (weitere) diverse Zusatzstoffe zugesetzt werden.

Für die Verwendung der Polymere (Polyacrylate) als Haftklebemassen wird zur Optimierung vorteilhaft zumindest ein Harz zugemischt. Als zuzusetzende klebrigmachende Harze sind alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.
In einer weiteren vorteilhaften Weiterentwicklung werden zu den Polyacrylaten ein oder mehrere Weichmacher, wie z.B. niedermolekulare Polyacrylate, Phthalate, wasserlösliche Weichmacher oder Weichharze hinzudosiert.
Die Polyacrylate können des weiteren mit einem oder mehreren Additiven wie Alterungsschutzmitteln, Lichtschutzmitteln, Ozonschutzmitteln, Fettsäuren, Harzen, Keimbildnem, Blähmitteln, Compoundierungsmitteln und/oder Beschleunigem abgemischt sein. Bei den Alterungsschutzmitteln sei besonders auf primäre und sekundäre Alterungsschutzmittel hingewiesen, die unter den Tradenamen Irganox™ der Fa. Ciba Geigy und Hostanox™ der Fa. Clariant kommerziell erhältlich sind.
Weiterhin können sie mit einem oder mehreren Füllstoffen wie Fasern, Ruß, Zinkoxid, Titandioxid, Voll- oder Hohlglas(mikro)kugeln, Mikrokugeln aus anderen Materialien, Kieselsäure, Silikaten und Kreide versetzt sein, wobei auch der Zusatz von blockierungsfreien Isocyanaten möglich ist.
Zur Förderung eines nachfolgenden Vemetzungsschritts können den Polyacrylaten vorteilhaft Vemetzersubstanzen beigemischt werden. Bevorzugte unter (actinischer) Strahlung vernetzende Substanzen sind z.B. bi- oder multifunktionelle Acrylate oder bi- oder multifunktionelle Urethanacrylate, bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Zur Verbesserung der Vernetzungseffizienz können die Polyacrylate gegebenenfalls stattdessen oder zusätzlich mit Photoinitiatoren abgemischt werden. Hierfür eignen sich bevorzugt Norrish-Typ I - und -Typ II -Spalter, wobei als einige Beispiele für beide Klassen nicht abschließend genannt werden sollen: Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate. Ein repräsentativer Überblick wird zum Beispiel in "Photoinitiation Photopolymerization and Photocuring, Fundamentals and Applications, von J.-P. Fouassier, Hanser Publishers, München, Wien , New York 1995" und "Chemistry & Technology öf UV & EB formulation for Coatings, Inks & Paints, Volume 5, A. Carroy, C. Decker, J.P. Dowling, P. Pappas, B. Monroe, ed. By P.K.T. Oldring, publ. By SITA Technology, London, England 1994"gegeben.

In einer Weiterentwicklung des erfinderischen Verfahrens wird das Polymer nach der erfolgten Polymerisation, welche bevorzugt bis zu einem Umsatz von > 98 % betrieben wird, zum Hotmelt aufkonzentriert, wobei das Lösungsmittel vorteilhaft bis zu einem maximalen Restgehalt von 0,1 % abgezogen wird, so dass das Polymer als Schmelze vorliegt.
Das Lösemittel wird bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.
Die Zugabe von Vernetzersubstanzen und/oder Photoinitiatoren kann vorteilhaft kurz vor dem Vernetzungsschritt, also in die Schmelze, erfolgen.

In einer vorteilhaften Ausführungsweise des erfindungsgemäßen Verfahrens wird das Polymer aus der Schmelze weiterverarbeitet, insbesondere gelfrei auf einen Träger beschichtet ("gelfrei" bedeutet die Erfüllung der Anforderungen für eine Beschichtbarkeit der Massen mit den üblicherweise verwendeten und dem Fachmann für diese Zwecke geläufigen Beschichtungsapparaturen, insbesondere für eine Beschichtung, welche sich durch ein gleichmäßiges (homogenes) Beschichtungsbild ohne Inhomogenitäten oder Schlieren auszeichnet, wenn durch die üblicherweise verwendeten Beschichtungsdüsen beschichtet wird.
Als Trägermaterial eignen sich beispielsweise die dem Fachmann geläufigen Materialien wie Folien (beispielsweise Polyester, PET, PE, PP, BOPP, PVC), Vliese, Schäume, Gewebe, Gewebefolien, Trennpapier (beispielsweise Glassine, HDPE, LDPE).

Die erfindungsgemäß hergestellte Polyacrylatmasse kann vorteilhaft in einem weiteren Schritt einer Vernetzungsreaktion, insbesondere unter Einfluss actinischer Strahlung, erfolgen. Die Vernetzung kann mit der nicht beschichteten Haftklebemasse durchgeführt werden, insbesondere vorteilhaft ist aber die Vernetzung nach einer Beschichtung auf einen Träger.

In einem erfinderischen Verfahren wird mit UV-Licht bestrahlt, wobei der zugesetzte oder copolymerisierte UV-Photoinitiator die Bildung von leichtflüchtigen Thiolen unterstützt und beschleunigt. Durch die UV-Bestrahlung wird weiterhin das Polyacrylat auf dem Trägermaterial vernetzt.

Die UV-Bestrahlung findet sehr bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm. Zur UV-Vemetzung kann aber auch monochromatische Strahlung in Form von Lasern verwendet werden. Um Überhitzungen zu vermeiden, kann es angebracht sein, den UV-Strahlengang teilweise abzuschatten. Weiterhin können spezielle Reflektoren-Systeme eingesetzt werden, die als Kaltlichtstrahler fungieren um somit Überhitzungen zu vermeiden.

In einem besonders zu bevorzugenden erfinderischen Verfahren wird das beschriebene Polyacrylat mit Elektronenstrahlen bestrahlt. Typische Bestrahlungsvorrichtungen, die zum Einsatz kommen können, sind Linearkathodensysteme, Scanner-systeme beziehungsweise Segmentkathodensysteme, sofern es sich um Elektronenstrahlbeschleuniger handelt. Eine ausführliche Beschreibung des Stands der Technik und der wichtigsten Verfahrensparameter findet man bei Skelhorne "Electron Beam Processing" in Vol. 1 "Chemistry & Technology of UV & EB Formulations for Coatings, Inks & Paints" publ. Sita Technology, London 1991. Die typischen Beschleunigungsspannungen liegen im Bereich zwischen 50 kV und 500 kV, vorzugsweise 80 kV bis 300 kV. Die angewandten Strahlungsdosen bewegen sich zwischen 5 bis 150 kGy, insbesondere 20 bis 100 kGy. Während der Elektronenbestrahlung in situ gebildete Thiolfragmente können mit den Verbindungen des Typs (L)_{y}-M innerhalb des Polyacrylates reagieren und bilden somit in dem erfinderischen Verfahren in situ Verbindungen des Typs (L)_{y}-M-(SR)ₓ innerhalb der Polymermatrix.

In einer weiteren Auslegung der Erfindung wird das Polyacrylat auf ein mit einem Kontaktmedium versehende Walze beschichtet und auf diesem Kontaktmedium mit aktinischer Bestrahlung vernetzt. Weitere Ausführungen zu diesem Verfahren sind DE 100 14 563 und DE 100 34 069 zu entnehmen.

Der Vemetzungseinheit kann eine Abkühleinheit für die Schmelzhaftklebemasse gleichgeschaltet sein, d.h. es kann vorteilhaft während der Vernetzung gekühlt werden. Eine bevorzugte Ausführungsform einer Apparatur für das erfinderische Verfahren sieht hierfür eine rotierende Walze vor, in einer sehr bevorzugten Variante wird eine Kühlwalze genutzt.
Durch Vernetzung unter Verwendung einer Kühlwalze können die zur Vernetzung erforderlichen Strahlungsdosen, insbesondere bei der Elektronenstrahlvernetzung, bedeutend höher gewählt werden als bei konventionellen Vemetzungsverfahren.

Auch für den Fall, dass eine Vernetzung der Haftklebemasse nicht vorgesehen ist, kann es sich als sinnvoll erweisen, die Haftklebemasse durch eine Abkühleinheit zu führen, insbesondere auf eine gekühlte Walze aufzulegen.

Es kann in günstiger Weise auf der Walze ein Kontaktmedium aufgetragen sein, welches gegebenenfalls nach der Bestrahlung mit actinischer Strahlung wieder zumindest teilweise entfernt wird.

In einem sehr begünstigten Verfahren enthält das Kontaktmedium Substanzen des Typs (L)_{y}M, die dann über das Kontaktmedium in das Polyacrylat übertragen werden.

Das Kontaktmedium kann dabei entweder auf die Rückseite der Haftklebemassenschicht oder auf die Kühlwalze aufgetragen werden, es ist aber ebenfalls möglich, dass das Kontaktmedium berührungslos aufgebracht wird, zum Beispiel durch Aufsprühen.

Als Kühlwalze dient gewöhnlich eine geerdete Metallwalze, die die im Falle der Elektronenstrahlvemetzung auftreffenden Elektronen und die dabei entstehende Röntgenstrahlung absorbiert. Sie muss mit einem wirksamen Kühlsystem ausgerüstet sein, um die erheblichen Wärmemengen wegzutransportieren. Zur Verhinderung der Korrosion ist diese Walze gewöhnlich mit einer Schutzschicht überzogen. Diese wird bevorzugt so ausgewählt, dass sie von dem Kontaktmedium gut benetzt wird. Im allgemeinen ist die Oberfläche elektrisch und/oder thermisch leitfähig. Es kann aber auch günstiger sein, die Walze mit einer oder mehreren Schichten aus isolierendem oder halbleitendem Material zu beschichten. Zudem sollte die Kühlfunktion sehr ausgeprägt sein, um den Haftklebeschaum zu stabilisieren. Daher wird in einer bevorzugten Verfahrensweise auf Temperaturen unterhalb 25 °C, in einer sehr bevorzugten Verfahrensweise auf Temperaturen unterhalb 5 °C heruntergekühlt.

Als Kontaktmedium kann dabei ein Material verwendet werden, welches in der Lage ist, einen Kontakt zwischen der Haftklebemasse und der Walzenoberfläche herzustellen, insbesondere ein Material, welches die Hohlräume zwischen der strukturierten Haftklebemassenschicht und der Walzenoberfläche ausfüllt.

Hierfür bieten sich fließfähige Materialien an, welche in einem weiten Viskositätsbereich eingesetzt werden können. Weiterhin können weiche, "anschmiegsame" Materialien als Kontaktmedium verwendet werden. Zum einen können in bevorzugter Weise weichelastische Materialien eingesetzt werden, wie beispielsweise Weichgummi, Weich-PVC andere Weichkunststoffe und ähnliche Materialien. Wenn diese fest mit der Kühlwalze verbunden sind, müssen sie über ausreichende Strahlenbeständigkeit verfügen sowie eine ausreichende thermische und elektrische Leitfähigkeit aufweisen.
Besonders vorteilhaft ist, das Kontaktmedium nicht permanent auf der Walze zu belassen, sondern vor dem Bestrahlungsprozess auf die Walze aufzubringen und nach dem Bestrahlungsprozess von dieser wieder zu entfernen. In einer weiteren günstigen Ausführungsform liegt das Kontaktmedium in Form eines austauschbaren Überzuges auf der Walze vor. Der Wechsel des Kontaktmediums kann während des Bestrahlungsprozesses (kontinuierlicher Wechsel) oder zwischen den einzelnen Bestrahlungsprozessen (diskontinuierlicher Wechsel) erfolgen. Durch den ständigen Austausch wird vermieden, dass das Kontaktmedium durch die laufende Bestrahlung so stark beeinträchtigt wird, dass es seine Funktion verliert.

Vorteilhaft wird als Kontaktmedium-eine Flüssigkeit verwendet, die gegebenenfalls Additive für zusätzliche Funktionen erhält. Dazu gehören die Erhöhung der Benetzung und der elektrischen Leitfähigkeit sowie das Abfangen von Radikalen und anderen reaktiven Spezies, die von der absorbierten Strahlung erzeugt werden.

Als Kontaktflüssigkeit kann vorteilhaft Wasser eingesetzt werden, welches die erforderlichen Aufgaben erfüllt. In einer weiteren Variante werden dem Kontaktmedium Substanzen zugesetzt, die darin zumindest teilweise löslich sind. Für Wasser als Kontaktmedium bieten sich als Zusätze beispielsweise Alkylalkoholate wie Ethanol, Propanol, Butanol, Hexanol an. Weiterhin sehr vorteilhaft sind insbesondere längerkettige Alkohole, Polyglykole, Ketone, Amine, Carboxylate, Sulfonate und dergleichen.

Günstige Kontaktmedien besitzen eine niedrige Oberflächenspannung. Eine Absenkung der Oberflächenspannung kann durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside [z.B. β-Di(hydroxyalkyl)sulfoniumsalz], weiterhin beispielsweise ethoxylierte Nonylphenyl-sulfonsäurearnmoniumsalze. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden. Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Kühlwalze einen Film dieses Kontaktmediums aufträgt bzw. aufstreicht.

Nach der Vernetzung werden die strukturierten Haftklebemassen bevorzugt auf ein Trägermaterial aufgebracht oder mit einer weiteren Haftklebemasse laminiert.

Das Heranführen der Trägermaterialien ist vorteilhaft unter einem gewissen Andruck vorzunehmen. Hierdurch wird die Wahrscheinlichkeit verringert, dass Luftblasen zwischen der Haftklebemasse und dem Träger eingeschlossen werden. Weiterhin kann die menge der Kontaktflüssigkeit auf das notwendige Maß begrenzt werden.
Der Andruck kann durch Einstellung einer geeigneten Bahnspannung oder durch Anpressen mit einer (weiteren) Walze erreicht werden. In letzterem Fall sollte die Oberfläche der Anpresswalze eine ausreichende Releasewirkung aufweisen, damit die auf der Oberfläche des Trägers befindliche Haftklebeschicht nicht mit der Walze verklebt.
Weitere Verfahren für das Anpressen sind z.B. die Verwendung von Luftstrahlen oder Luftkissen oder die Ausnutzung elektrostatischer Kräfte.

In alternativer Vorgehensweise kann die Haftklebemasse nach dem Austritt aus der Düse direkt auf ein verbleibendes Trägermaterial aufgelegt und gegebenenfalls dort vernetzt werden.

Gegenstand der Erfindung ist weiterhin eine Haftklebemasse auf Acrylatbasis, welche einen messbaren Anteil an Metall-Schwefel-Verbindungen der allgemeinen Struktur (L)_{z}-M-(SR)ₓ enthält, wobei die Symbole wie obenstehend definiert sind. In vorteilhafter Weise handelt es sich dabei um eine Haftklebemasse, welche nach einem der obenstehenden Verfahren erhalten wurde oder erhältlich ist. Die Haftklebemasse kann vernetzt oder unvernetzt vorliegen.

Die Polymere besitzen in einer bevorzugten Auslegung ein mittleres Molekulargewicht M_{w} (Gewichtsmittel) von mindestens 100.000 g/mol, insbesondere zwischen 100.000 und 2.000.000 g/mol, wobei diese Molekulargewichte über Gelpermeationschromatographie (GPC) bestimmt werden, gegen PMMA Standards gemessen wird und als Elutionsmittel Tetrahydrofuran mit 0.1 Gew.% Trifluoressigsäure verwendet wird. Alternativkann das Molekulargewicht über Matrix-unterstützte Laser-Desorption/Ionisations-Massenspektrometrie (MALDI-MS) oder Lichtstreuung ermittelt werden.
Die Haftklebemasse weist in einer bevorzugten Ausführungsform eine Polydispersität D = M_{w}/Mₙ von nicht mehr als 3,0 auf (Mₙ: mittleres Molekulargewicht; Zahlenmittel).

Zum Gegenstand der Erfindung gehört zudem die Verwendung einer Haftklebemasse auf Acrylatbasis, welche einen messbaren Anteil an Metall-Schwefel-Verbindungen der allgemeinen Struktur (L)_{z}-M-(SR)ₓ enthält, für ein einseitig oder doppelseitig mit Haftklebemasse ausgerüstetes Klebeband oder für einen anders geformten ein- oder doppelseitig ausgerüsteten Klebekörper, wie beispielsweise Klebefolien, Klebeetiketten etc.
Dabei ist die Haftklebemasse insbesondere ein- oder doppelseitig auf einen Träger aufgetragen. Die Auftragung erfolgt dabei vorteilhaft im vernetzten oder im unvernetzten Zustand aus der Schmelze heraus; als Trägermaterial können beispielsweise die dem Fachmann geläufigen Materialien wie Folien (beispielsweise Polyester, PET, PE, PP, BOPP, PVC), Vliese, Schäume, Gewebe, Gewebefolien, Trennpapier (beispielsweise Glassine, HDPE, LDPE) als sehr geeignet in Frage.

### Beispiele

### Testmethoden

Folgende Testmethoden wurden angewendet, um die klebtechnischen als auch generelle Eigenschaften der hergestellten Haftklebemassen zu evaluieren.

### 180° Klebkrafttest (Test A)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180°-Winkel vom Substrat abgezogen. Die Stahlplatten wurden zuvor zweimal mit Aceton und einmal mit Isopropanol gewaschen. Die Messergebnisse sind in N/cm angegeben und sind gemittelt aus drei Messungen. Alle Messungen wurden bei Raumtemperatur durchgeführt.

### Messung der Ausgasung (Test B):

Die leicht-flüchtigen Bestandteile wurden über GC-MS ermittelt. Als Messgeräte wurden verwendet:
GC: Hewlett Packard HP 5890 SERIES 11 MS: Hewlett Packard HP 5989 A
Zur Messung wurde eine DB-5 Säule mit 60 m Länge, 0,25 mm Innendurchmesser und 1 µm Filmdicke eingebaut. Die Messung erfolgte mit einem Temperaturprogramm 50 °C (3 min.) - 150 C/min - 260 °C (2 min.). Als Trägergas wurde Wasserstoff (90 kPa) mit einem Strom von 1 ml/min benutzt. Das Splitverhältnis betrug 1:10.

### Vorbereitung der Muster:

Die Klebemassen wurden auf PET-Folie im Hotmeltverfahren beschichtet. Der Masseauftrag betrug ca. 50 g/m². Nach oder vor der UV-Bestrahlung wurde eine etwa 40 cm² große Probenfläche aus dem Lappenmuster ausgeschnitten, mit Glasperlen (Durchmesser: 60 - 80 µm) bestreut und zusammengerollt in ein 25 ml HeadspaceGläschen überführt. Die Probe wurde 1 h bei 100 °C ausgeheizt und abschließend die leichtflüchtigen Bestandteile aus dem Dampfraum in den GC injiziert.

Die Quantifizierung erfolgte gegen externe Standards.

### Gepermeationschromotographie GPC (Test C)

Die Bestimmung des mittleren Molekulargewichtes M_{w} und der Polydisperistät PD erfolgte über die Gelpermeationschromatographie. Als Eluent wurde THF mit 0,1 Vo).-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

### Bestimmung des Gelanteils (Test D)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### Praktische Durchführungen:

### Durchführung des Hotmeltprozesses im Messkneter (Methode E):

Der Acrylathotmelt-Prozess wurde in dem Messkneter Rheomix 610p der Fa. Haake simuliert. Als Antriebseinheit stand das Gerät Rheocord RC 300p zur Verfügung. Gesteuert wurde das Gerät mit der Software PolyLab System. Der Kneter wurde jeweils mit 52 g lösungsmittelfreier Acrytathaftklebemasse (~80 % Füllgrad) befüllt. Die Versuche wurden bei einer Knettemperatur von 120 °C, einer Umdrehungszahl von 40 U/min und einer Knetzeit von 24 Stunden durchgeführt. Anschließend wurden die Muster über einen Hotmelt-Coater mit zwei beheizbaren Walzen auf eine 23 µm dicke mit einem Saran-Primer versehende PET-Folie mit einem Masseauftrag von 50 g/m² beschichtet.

### UV-Bestrahlung

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei die Muster zur Erhöhung der Bestrahlungsdosis in mehreren Durchgängen bestrahlt wurden. Die UV-Dosis wurde mit dem Power-Puck der Fa. Eltosch gemessen. Die Dosis eines Bestrahlungsdurchganges betrug ca. 140 mJ/cm² im UV-B Bereich und 25 mJ/cm² im UV-C Bereich.

### Elektronenbestrahlung

Die Elektronenbestrahlung erfolgte mit einem Gerät der Fa. Electron Crosslinking AB, Halmstad, Schweden. Das zu bestrahlende Haftklebebandmuster wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min.

### Synthese des Polymerisationsreglers:

### Herstellung von Bis-2,2'-phenylethyl-thiocarbonat (Ia)

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 18(13), S. 1531-1536, 1988. Ausbeute nach Destillation: 72%.
Charakterisierung: ¹H-NMR (CDCl₃) δ (ppm): 7,20-7,40 (m, 10 H). 1,53, 1,59 (2 x d, 6 H), 3,71, 3,81 (2 x m, 2H).

### Herstellung der Polymere:

### Polymer 1:

Ein für radikalische Polymerisationen konventioneller 2 L-Glasreaktor wurde mit 20 g Acrylsäure, 380 g n-Butylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Das mittlere Molekulargewicht und die Polydispersität wurden mittels Test C bestimmt.

Das Polymer wurde in einem Vakuumtrockenschrank bei 80 °C und einem Druck von 10 Torr aufkonzentriert.

### Polymer 2:

Ein für radikalische Polymerisationen konventioneller 2 L-Glasreaktor wurde mit 20 g Acrylsäure, 380 g n-Butylacrylat, 0,55 g Bis-2,2'-phenylethyl-thiocarbonat und 170 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Die Reaktion wurde nach 48 h Reaktionszeit abgebrochen und auf Raumtemperatur abgekühlt. Während des Abkühlens wurden 0,5 Gew.-% Benzophenon eingerührt. Das mittlere Molekulargewicht und die Polydispersität wurden mittels Test C bestimmt.
Das Polymer wurde in einem Vakuumtrockenschrank bei 80 °C und einem Druck von 10 Torr aufkonzentriert.

### Polymer 3:

Ein für radikalische Polymerisationen konventioneller 2 L-Glasreaktor wurde mit 20 g Acrylsäure, 380 g n-Butylacrylat, 0.5 g Dodecanthiol und 266 g Aceton befüllt. Nach 45 Minuten Durchleiten von Stickstoffgas unter Rühren wurde der Reaktor auf 58 °C hochgeheizt und 0,2 g Azoisobutyronitril (AIBN, Vazo 64™, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton verdünnt. Zur Reduktion der Restinitiatoren wurden nach 8 und nach 10 h jeweils 0,6 g Bis-(4-tert.-Butylcyclohexanyl)-Peroxydicarbonat (Perkadox 16™, Fa Akzo Nobel) hinzugegeben. Die Reaktion wurde nach 24 h Reaktionszeit abgebrochen und auf Raumtemperatur abgekühlt. Das mittlere Molekulargewicht und die Polydispersität wurden mittels Test C bestimmt.

### Beispiele:

### Beispiel 1: (Referenz)

Das Polymer 1 wurde in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden mit einem silikonisierten Trennpapier der Fa. Laufenberg abgedeckt und anschließend mit 50 kGy und 180 kV Beschleunigungsspannung mit Elektronenstrahlen vernetzt (s. Elektronenbestrahlung). Zur Analyse wurden die Testmethoden A, B und D durchgeführt.

### Beispiel 2: (Referenz)

Das Polymer 2 wurde in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden mit einem silikonisierten Trennpapier der Fa. Laufenberg abgedeckt und anschließend mit 50 kGy und 180 kV Beschleunigungsspannung mit Elektronenstrahlen vernetzt (s. Elektronenbestrahlung). Zur Analyse wurden die Testmethoden A, B und D durchgeführt.

### Beispiel 3:

Das Polymer 1 wurde mit 2 Gew.-% Zink-Resinat abgemischt, in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden mit einem silikonisierten Trennpapier der Fa. Laufenberg abgedeckt und anschließend mit 50 kGy und 180 kV Beschleunigungsspannung mit Elektronenstrahlen vernetzt (s. Elektronenbestrahlung). Zur Analyse wurden die Testmethoden A, B und D durchgeführt.

### Beispiel 4:

Das Polymer 2 wurde mit 2 Gew.% Zink-Resinat abgemischt, in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden mit einem silikonisierten Trennpapier der Fa. Laufenberg abgedeckt und anschließend mit 50 kGy und 180 kV Beschleunigungsspannung mit Elektronenstrahlen vernetzt (s. Elektronenbestrahlung). Zur Analyse wurden die Testmethoden A, B und D durchgeführt.

### Beispeil 5:

Das Polymer 2 wurde mit 2 Gew.-% Zink-Resinat abgemischt, in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden offen mit UV-Licht bestrahlt (s. UV-Bestrahlung). Zur Analyse wurden die Testmethoden A, B und D durchgeführt.

### Beispiel 6:

Das Polymer 3 wurde mit 2 Gew.-% Zink-Resinat abgemischt, in einem Vakuumtrockenschrank bei 80 °C und einem Druck von 10 Torr aufkonzentriert. Anschließend wurde nach Methode E der Hotmelt-Prozess durchgeführt und beschichtet. Die beschichteten Muster wurden mit einem silikonisierten Trennpapier der Fa. Laufenberg abgedeckt und anschließend mit 50 kGy und 180 kV Beschleunigungsspannung mit Elektronenstrahlen vernetzt (s. Elektronenbestrahlung). Zur Analyse wurden die Testmethoden A, B und D durchgeführt.

### Resultate

Im folgenden sind in der Tabelle 1 die mit GPC nach Testmethode C gemessenen Molekulargewichtsdaten aufgelistet:

| Tabelle 1 | | |
|---|---|---|
| | M_{w} [g/mol] | Polydispersität PD |
| Polymer 1 | 365.000 | 2,2 |
| Polymer 2 | 388.000 | 2,1 |
| Polymer 3 | 422.000 | 3,5 |

| | | |
|---|---|---|
| M_{w}: mittleres Molekulargewicht aus GPC | | |
| PD: M_{W}/M_{N} = Polydispersität aus GPC | | |

Als Referenzmuster wurden die Beispiele- 1 und 2 hergestellt. Diese Referenzmuster wurden in einer Trithiocarbonat-geregelten Polymerisation synthetisiert und anschließend ohne Zusatz mit Elektronenstrahlen vernetzt. Die Beispiele 3 und 4 wurden ebenfalls über eine Trithiocarbonat-geregelte Polymerisation hergestellt, aber mit Zink-Resinat abgemischt und dann mit Elektronenstrahlen bestrahlt. Beispiel 5 wurde nach dem gleichen Prinzip hergestellt, aber mit UV-Strahlen vernetzt. Letztendlich wurde mit Beispiel 6 ein Thioether enthaltendes Polymer hergestellt, mit Zink-Resinat abgemischt und dann mit Elektronenstrahlen bestrahlt.
Zur Charakterisierung des Geruches wurden GC Headspace Messungen durchgeführt (Testmethode B) und die entstehenden leichtflüchtigen Anteile charakterisiert. Die sehr schlecht riechenden Beispiele 1 und 2 weisen einen merklichen Anteil Butanthiol und höherer Homologe auf. Die Bildung dieser Verbindung kann leicht den schlechten Geruch der Beispiele 1 und 2 nach der ES-Bestrahlung erklären. Daher wurde über Testmethode 2 der freiwerdende Anteil des Butanthiol bestimmt und innerhalb der Beispiele 1 bis 6 miteinander verglichen. Die Ergebnisse dieser GC-Untersuchungen sind in Tabelle 2 aufgelistet.

| Tabelle 2 | |
|---|---|
| Beispiel | Flüchtige Anteile Butanthiol [µg/g] |
| 1 | 55 |
| 2 | 75 |
| 3 | n.n. |
| 4 | n.n. |
| 5 | n.n. |
| 6 | n.n. |

| | |
|---|---|
| n.n.= nicht nachweisbar | |

Die Ergebnisse verdeutlichen, dass der Anteil Butanthiol durch Abmischung mit Zink-Resinat nach der Bestrahlung deutlich reduziert wird. Das Butanthiol reagiert mit dem Zink-Resinat und bildet einen stabilen Zink-Sulfid-Komplex, der eine sehr geringe Flüchtigkeit besitzt und im Polymer verbleibt. Die unterschiedlichen Beispiele 3 bis 6 belegen, dass sowohl Trithiocarbonat-geregelte Polymer, Thiol-geregelte Polymere als auch UV- und ES-bestrahlte Polymere keinen Geruch mehr aufweisen, so dass (bevorzugt durch das Abfangen durch das Metall, also durch Bildung der Zink-Thiol-Verbindung) in keinen Fall freie Thiole austreten und kein übel riechender Geruch verursacht wird.
Um sicher zu stellen, ob solche Polymere auch als Haftklebemassen eingesetzt werden können, wurde im folgenden der Vernetzungsgrad der Haftklebemassen sowie die Sofortklebkraft auf Stahl bestimmt. Die Ergebnisse sind in Tabelle 3 zusammengefasst.

| Tabelle 3 | | |
|---|---|---|
| Beispiel | KK-Stahl, [N/cm] | Gelwert [%] |
| 1 | 3,2 | 70 |
| 2 | 3,0 | 74 |
| 3 | 3,5 | 65 |
| 4 | 3,7 | 54 |
| 5 | 3,4 | 64 |
| 6 | 3,5 | 60 |

| | | |
|---|---|---|
| KK: Sofortklebkraft auf Stahl | | |
| Masseauftrag 50 g/m² | | |

Die gemessenen Gelwerte belegen, dass die Beispiele 1 bis 6 deutlich vernetzt sind und mit einem Vernetzungsgrad von größer 50 % in einem normalen Bereich liegen. Dies korrespondiert auch mit den Klebkräften. Für die Beispiele 3 bis 6 wurden im Vergleich mit den Beispiel 1 und 2 etwas höhere Klebkräfte gemessen.

## Patentansprüche

1. Verfahren zur Herstellung einer Polyacrylathaftklebemasse, **dadurch gekennzeichnet, dass**
einer die Atomabfolge C - S - C enthaltenden Polyacrylatmasse zumindest eine Metallverbindungen des Typs (L)_{y}M mit
M = Metallatom oder Metallion
L = Gegenion oder Ligand
y = 0 bis 6
zugesetzt wird.

2. Verfahren nach Anspruch 1, enthaltend zumindest die folgenden Verfahrensschritte:
- Polymerisation der Monomermischung unter Verwendung zumindest einer Verbindung enthaltend die Atomabfolge C - S - C als Regler,
- Additivierung mit Metallverbindungen des Typs (L)_{y}M,
- Aufkonzentration des Polymerisates zu einer Heißschmelzmasse,
- Vernetzung des Polymers durch actinische Strahlung.

3. Verfahren nach zumindest einem der vorangehenden Ansprüche, **dadurch gekennzeichnet, dass**
sich die Verbindung enthaltend die Atomabfolge C - S - C durch eine der folgenden Strukturen darstellen lässt:
R* - S - R** (Thioether) 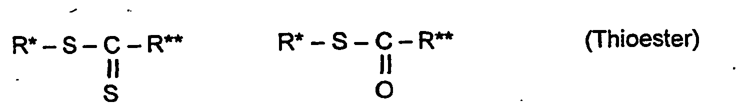 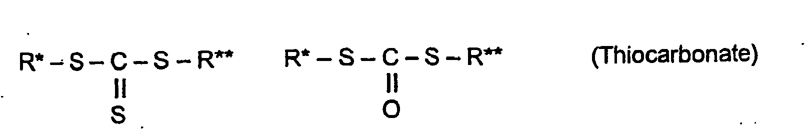 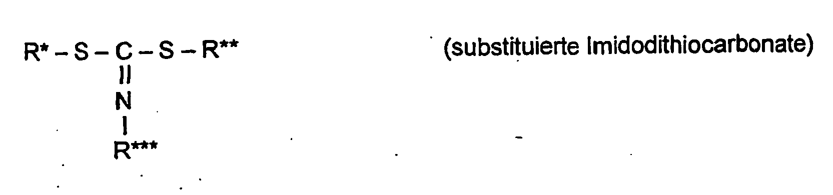
wobei R*, R**, R*** unabhängig voneinander aromatische oder aliphatische gesättigte oder ungesättigte Kohlenwasserstoffreste darstellen.

4. Verfahren nach Anspruch 3, **dadurch gekennzeichnet, dass**
die Reste R*, R** und/oder R*** ganz oder teilweise in oligomerer und/oder polymerer Form vorliegen.

5. Verfahren nach zumindest einem der vorangehenden Ansprüche, **dadurch gekennzeichnet, dass**
die Metallverbindung (L)_{y}M ein Metallsalz, ein Metallhydroxid oder eine Metallkomplexverbindung ist.

6. Verfahren nach zumindest einem der vorangehenden Ansprüche, **dadurch gekennzeichnet, dass**
das Polymerisat vor der Vernetzung auf ein Trägermaterial aufgetragen wird.

7. Verfahren nach zumindest einem der vorangehenden Ansprüche, **dadurch gekennzeichnet, dass**
die Polyacrylatmasse mindestens zu 50 % auf acrylischen Monomeren basiert.

8. Verfahren nach zumindest einem der vorangehenden Ansprüche, **dadurch gekennzeichnet, dass**
die Polyacrylatmasse zumindest teilweise auf Monomeren der allgemeinen Formel
CH₂ = CH(R¹)(COOR²)
basiert, wobei
R¹ = H oder CH₃
R² = H oder ein Kohlenwasserstoffrest enthaltend 1 bis 30 Kohlenstoffatome.

9. Verfahren nach zumindest einem der vorangehenden Ansprüche, **dadurch gekennzeichnet, dass**
das Metall M aus der folgenden Gruppe gewählt wird:
Kupfer, Nickel, Eisen, Zink, Zinn, Cadmium, Aluminium, Kobalt, Silber, Gold.

10. Verfahren nach zumindest einem der vorangehenden Ansprüche, **dadurch gekennzeichnet, dass**
die Gegenionen beziehungsweise Liganden L unabhängig voneinander aus der folgenden Gruppe gewählt werden:
Halogenide, Alkoxide, Boride, Hydroxide, Nitrate, Phophate, Perchlorate, Phtalocyanine, Oxinate, Acetate, Acetylacetonate, Corbonate, Formiate, Cyanide, Naphthalocyanine, Rhodanide, Carboxylate, Chelate, Resinate, Carbide, Phorphine, Alkyle, Alkenyle, Alkinyle, Dione, Aryle, substituierte Aryle, Citrate, Heterocyclen, Pentadienyl, Amine, multifunktionelle Amine, Ether, Kronenether.

11. Haftklebemasse auf Polyacrylatbasis, **gekennzeichnet durch**
die Anwesenheit von zumindest einer Metall-Schwefelverbindungen der Struktur
(L)_{z}-M-(SR)ₓ,
wobei
M ein Metall aus der Gruppe Cu, Ni, Fe, Zn, Cd, Al, Co, Ag, Au darstellt,
R unabhängig voneinander aliphatische, aromatische, gesättigte, ungesättigte, oligomere oder polymere Reste darstellt,
L unabhängig voneinander lonen oder Liganden aus der Gruppe der Halogenide, Alkoxide, Boride, Hydroxide, Nitrate, Phosphate, Perchlorate, Phthalocyanine, Oxinate, Acetate, Acetylacetonate, Carbonate, Formiate, Cyanide, Naphthalocyanine, Rhodanide, Carboxylate, Chelate, Resinate, Carbide, Phorphine, Alkyle, Alkenyle, Alkinyle, Dione, Aryle, substituierte Aryle, Citrate, Heterocyclen, Pentadienyl, Amine, multifunktionelle Amine, Ether, Kronenether darstellt.

12. Haftklebemasse nach Anspruch 11, **dadurch gekennzeichnet, dass**
Metall-Schwefel-Verbindungen der Formel (L)_{z}-M-(SR)ₓ mindestens zu 25 ppm, bezogen auf das zugrunde liegende Polymer, vorhanden sind.

## Claims

1. Process for preparing a pressure-sensitive polyacrylate adhesive, **characterized in that**
a polyacrylate composition including the atomic sequence C - S - C is admixed with at least one metal compound of type (L)_{y}M where
M = metal atom or metal ion
L = counterion or ligand
y = 0 to 6.

2. Process according to Claim 1, comprising at least the following steps:
- polymerizing the monomer mixture using at least one compound including the atomic sequence C - S - C as regulator,
- additizing with metal compounds of type (L)_{y}M,
- concentrating the polymer to form a hotmelt composition,
- crosslinking the polymer by means of actinic radiation.

3. Process according to at least one of the preceding claims, **characterized in that**
the compound comprising the atomic sequence C - S - C can be represented by one of the following structures:
R*-S-R** (thioethers) 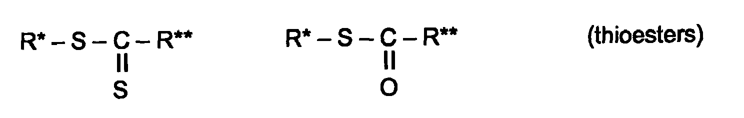 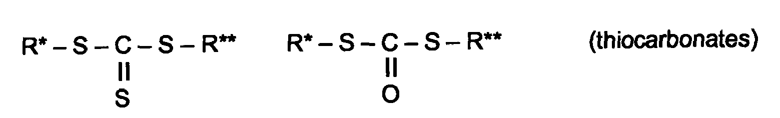 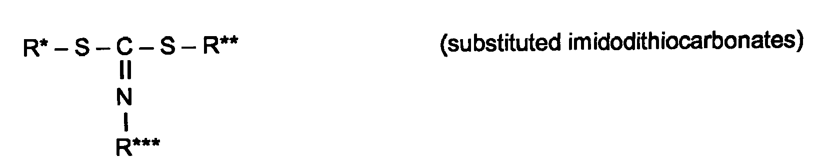
where R*, R** and R*** independently of one another are aromatic or aliphatic saturated or unsaturated hydrocarbon radicals.

4. Process according to Claim 3, **characterized in that**
the radicals R*, R** and/or R*** are present wholly or partly in oligomeric and/or polymeric form.

5. Process according to at least one of the preceding claims, **characterized in that**
the metal compound (L)_{y}M is a metal salt, a metal hydroxide or a metal complex compound.

6. Process according to at least one of the preceding claims, **characterized in that**
the polymer is applied to a backing material prior to crosslinking.

7. Process according to at least one of the preceding claims, **characterized in that**
the polyacrylate composition is based at least 50% on acrylic monomers.

8. Process according to at least one of the preceding claims, **characterized in that**
the polyacrylate composition is based at least partly on monomers of the general formula
CH₂ = CH(R¹)(COOR²)
where
R¹ = H or CH₃
R² = H or a hydrocarbon radical containing 1 to 30 carbon atoms.

9. Process according to at least one of the preceding claims, **characterized in that**
the metal M is selected from the following group:
copper, nickel, iron, zinc, tin, cadmium, aluminium, cobalt, silver, gold.

10. Process according to at least one of the preceding claims, **characterized in that**
the counterions and/or ligands L are selected, independently of one another, from the following group:
halides, alkoxides, borides, hydroxides, nitrates, phosphates, perchlorates, phthalocyanines, oxinates, acetates, acetylacetonates, carbonates, formates, cyanides, naphthalocyanines, rhodanides (thiocyanates), carboxylates, chelates, resinates, carbides, phosphines, alkyls, alkenyls, alkynyls, diones, aryls, substituted aryls, citrates, heterocycles, pentadienyl, amines, polyfunctional amines, ethers, crown ethers.

11. Polyacrylate-based pressure-sensitive adhesive, **characterized**
**by** the presence of at least one metal-sulphur compound of the structure
(L)_{z}-M-(SR)ₓ,
where
M represents a metal from the group consisting of Cu, Ni, Fe, Zn, Cd, Al, Co, Ag and Au,
R independently at each occurrence denotes aliphatic, aromatic, saturated, unsaturated, oligomeric or polymeric radicals,
L independently at each occurrence represents ions or ligands from the group consisting of halides, alkoxides, borides, hydroxides, nitrates, phosphates, perchlorates, phthalocyanines, oxinates, acetates, acetylacetonates, carbonates, formates, cyanides, naphthalocyanines, thiocyanates, carboxylates, chelates, resinates, carbides, phosphines, alkyls, alkenyls, alkynyls, diones, aryls, substituted aryls, citrates, heterocydes, pentadienyl, amines, polyfunctional amines, ethers, crown ethers.

12. Pressure-sensitive adhesive according to Claim 11, **characterized in that**
metal-sulphur compounds of the formula (L)_{z} - M - (SR)ₓ are present at least at 25 ppm, based on the parent polymer.

## Revendications

1. Procédé de préparation d'une pâte autoadhésive au polyacrylate, **caractérisé en ce qu'**à une pâte de polyacrylate qui contient la succession d'atomes C-S-C, on ajoute au moins un composé métallique de type (L)_{y}M
dans laquelle
M = atome ou ion métallique
L = contre-ion ou ligand et
y = 0 à 6.

2. Procédé selon la revendication 1, qui contient au moins les étapes de procédé qui consistent à:
- polymériser le mélange de monomères en utilisant au moins un composé qui contient la succession d'atomes C-S-C comme régulateur,
- ajouter des composés métalliques de type (L)_{y}M,
- concentrer le polymère en une pâte fondue à chaud et
- réticuler le polymère à l'aide d'un rayonnement actinique.

3. Procédé selon au moins l'une quelconque des revendications précédentes, **caractérisé en ce que** le composé qui contient la succession d'atomes C-S-C peut être représenté par l'une des structures suivantes:
R*-S-R** (thioéther) 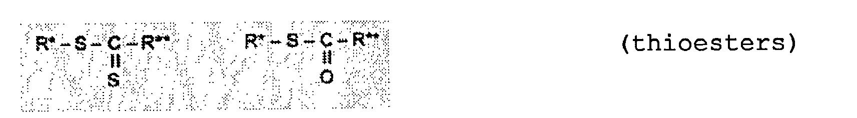 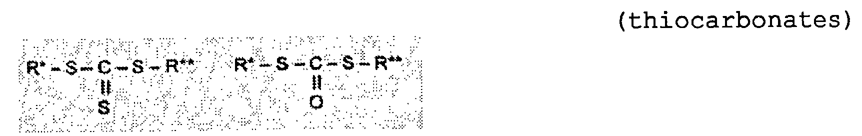 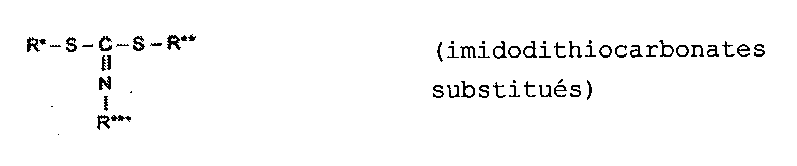
dans lesquelles
R*, R**, R*** représentent indépendamment l'un de l'autre des groupes hydrocarbures aromatiques ou aliphatiques, saturés ou insaturés.

4. Procédé selon la revendication 3, **caractérisé en ce que** les groupes R*, R** et/ou R*** présentent totalement ou partiellement une forme oligomère et/ou polymère.

5. Procédé selon au moins l'une quelconque des revendications précédentes, **caractérisé en ce que** le composant métallique (L)_{y}M est un sel de métal, un hydroxyde de métal ou un composé complexe de métal.

6. Procédé selon au moins l'une quelconque des revendications précédentes, **caractérisé en ce que** le polymère est appliqué sur un matériau de support avant sa réticulation.

7. Procédé selon au moins l'une quelconque des revendications précédentes, **caractérisé en ce que** la pâte de polyacrylate est à base d'au moins 50% de monomères acryliques.

8. Procédé selon au moins l'une quelconque des revendications précédentes, **caractérisé en ce que** la pâte de polyacrylate est au moins en partie à base de monomères de formule générale
CH₂ = CH (R¹) (COOR²)
dans laquelle
R¹ = H ou CH₃ et,
R² = H ou un groupe hydrocarbure qui contient de 1 à 30 atomes de carbone.

9. Procédé selon au moins l'une quelconque des revendications précédentes, **caractérisé en ce que** le métal M est sélectionné dans l'ensemble suivant:
cuivre, nickel, fer, zinc, étain, cadmium, aluminium, cobalt, argent, or.

10. Procédé selon au moins l'une quelconque des revendications précédentes, **caractérisé en ce que** les contre-ions ou ligands L sont sélectionnés indépendamment l'un de l'autre dans l'ensemble ci-dessous:
halogénures, alcoxydes, borures, hydroxydes, nitrates, phosphates, perchlorates, phtalocyanines, oxynates, acétates, acétylacétonates, carbonates, formiates, cyanures, naphtalocyanines, rhodanures, carboxylates, chélates, résinates, carbures, phosphines, alkyles, alcényles, alcinyles, diones, aryles, aryles substitués, citrates, hétérocycles, pentadiényle, amines, amines multifonctionnelles, éthers et éthers en couronne.

11. Pâte autoadhésive à base de polyacrylate, **caractérisée par** la présence d'au moins un composé métallique du soufre de structure
(L)_{z}-M-(SR)ₓ,
dans laquelle
M représente un métal de l'ensemble constitué de Cu, Ni, Fe, Zn, Cd, Al, Co, Ag, Au,
R représente, indépendamment l'un de l'autre, des groupes aliphatiques, aromatiques, saturés, insaturés, oligomères ou polymères,
L représente indépendamment l'un de l'autre des ions ou ligands sélectionnés dans l'ensemble constitué des halogénures, alcoxydes, borures, hydroxydes, nitrates, phosphates, perchlorates, phtalocyanines, oxynates, acétates, acétylacétonates, carbonates, formiates, cyanures, naphtalocyanines, rhodanures, carboxylates, chélates, résinates, carbures, phosphines, alkyles, alcényles, alcinyles, diones, aryles, aryles substitués, citrates, hétérocycles, pentadiényle, amines, amines multifonctionnelles, éthers et éthers en couronne.

12. Pâte autoadhésive selon la revendication 11, **caractérisée en ce qu'**elle contient des composés métalliques du soufre de formule (L)_{z}- M - (SR)ₓ à une teneur d'au moins 25 ppm par rapport au polymère de base.
